# EUROPÄISCHE PATENTANMELDUNG

(11) **EP 2 305 519 A1**
(43) Veröffentlichungstag der Anmeldung: **06.04.2011**
(21) Anmeldenummer: 10007072.1
(22) Anmeldetag: 09.07.2010
(51) Int. Cl.: B60R 19/24

(54) **Montagesystem für die Befestigung einer Stoßfängerverkleidung**

(30) Priorität: 01.10.2009 DE 202009013150 U
(71) Anmelder: Peguform GmbH, 79268 Bötzingen (DE)
(72) Erfinder: Ruder, Jürgen, 85092 Kösching (DE)
(74) Vertreter: Neunert, Peter Andreas

(57) **Zusammenfassung**

Die Erfindung betrifft ein Montagesystem für die Befestigung einer Stoßfängerverkleidung 1 an einer Kraftfahrzeugkarosserie 2 mit einer Befestigungsleiste 3, einem Führungsprofil 4 und einem im Montagezustand einen Verbindungsschluss zwischen der Befestigungsleiste 3 und dem Führungsprofil 4 bewirkendem Schieberiegel 5, wobei zumindest das Führungsprofil 4 und der Schieberiegel 5 als separate Bauteile ausgeführt sind.

## Beschreibung

Die vorliegende Erfindung betrifft ein Montagesystem für die Befestigung einer Stoßfängerverkleidung mit den Merkmalen des Oberbegriffs des Anspruchs 1.

Im Kraftfahrzeugbau werden hochbelastbare Verbindungen in der Regel relativ montageaufwändig durch Schweißen, Schrauben, Nieten oder Verkleben hergestellt. Die Herstellung solcher Verbindungen ist zeitaufwändig und es gestaltet sich schwierig, die geforderten Qualitätswerte, wie z. B. Spaltmaße und enge Toleranzen, einzuhalten.

In der DE 199 12 267 A1 wird eine Rastvorrichtung beschrieben, insbesondere zur Verbindung eines Stoßfängers mit einem Kotflügel, wobei am ersten Bauteil mehrere beabstandete Rastbolzen und am zweiten Bauteil eine Rastleiste mit entsprechenden Rastöffnungen für eine gegenseitige Rastverbindung angeordnet sind. Mit dieser Anordnung gelingt es, den Zeitaufwand für die Montage des Stoßfängers zu reduzieren, jedoch ist die Rastverbindung selber relativ kompliziert und aufwändig konstruiert, um eine hochbelastbare Verbindung zu gewährleisten.

In der DE 10 2005 029 544 A1 wird eine Verbindungsvorrichtung zur Befestigung eines Stoßfängerseitenteils beschrieben mit einer Aufnahmenut zur Aufnahme einer längs des Stoßfängerseitenteils verlaufenden Befestigungsleiste und in der Aufnahmenut angeordneten Rastelementen, die mit Rastfenstern der Befestigungsleiste zusammenwirken, wobei die Geometrie der Verbindungsvorrichtung so gestaltet ist, dass definierte Auslöse- und Betätigungskräfte des Rastelementes beim Einrasten, beim Ausrasten und im Crashfall vorgegeben sind. Um dieses kontrollierte Verhalten zu realisieren, werden relativ hohe Anforderungen an die Formgebung und Ausformung der Verbindungsvorrichtungen gestellt, wodurch die Herstellung eines solchen Teils erschwert und verteuert wird.

In der DE 197 41 062 A1 wird eine Mehrfunktionsschiene zum sicheren und formschlüssigen Montieren, Ausrichten und Fixieren von Karosseriebauteilen beschrieben. Diese Mehrfunktionsschiene wird an dem entsprechenden Bauteil vormontiert und ist mit Aufnahmeöffnungen in Form von Schlüssellöchern ausgerüstet, in die Befestigungsbolzen, die an der Karosserie angeordnet sind, im Montagefall eingreifen. Auch diese Verbindungsvorrichtung ist relativ aufwändig gestaltet.

Allgemein besteht bei allen Rastverbindungen die Schwierigkeit, dass die Demontage umso schwieriger ist, je belastbarer die Verbindung selber sein soll.

Es besteht somit weiterhin das Problem, ein Montagesystem für Bauteile an Kraftfahrzeugen zur Verfügung zu stellen, das eine einfache und schnelle Montage erlaubt, wobei gleichzeitig die Qualitätsanforderungen in Bezug auf Spaltmaß und Toleranz erfüllt werden. Darüber hinaus soll die Montage und Demontage mit einfachen Handgriffen und ohne die Notwendigkeit des Einsatzes von Zusatzwerkzeug durchführbar sein.

Gelöst wird das Problem durch ein Montagesystem mit den Merkmalen des Anspruchs 1. Vorteilhafte Ausgestaltungen und Weiterentwicklungen des erfindungsgemäßen Montagesystems sind Gegenstand der Unteransprüche.

Das erfindungsgemäße Montagesystem für die Befestigung einer Stoßfängerverkleidung an einer Kraftfahrzeugkarosserie umfasst eine an der Stoßfängerverkleidung anzuordnende Befestigungsleiste mit Aufnahmeöffnungen für Befestigungsvorrichtungen und ein an der Fahrzeugkarosserie befestigbares Führungsprofil, das die zu den Aufnahmeöffnungen in der Befestigungsleiste korrespondierenden Befestigungsvorrichtungen aufweist. Die Befestigungsleiste ist mit einem Schieberiegel kombiniert, der im Montagezustand einen Verbindungsschluss zwischen der Befestigungsleiste und dem Führungsprofil bewirkt. Der Schieberiegel weist korrespondierende Aufnahmeöffnungen für die Befestigungseinrichtungen auf. Führungsprofil und Schieberiegel sind als separate Bauteile ausgeführt, während die Befestigungsleiste der Stoßfängerverkleidung direkt angeformt sein kann oder ebenfalls als separates Bauteil auf die Stoßfängerverkleidung aufgesteckt werden kann.

Die Befestigungsvorrichtungen des Führungsprofils umfassen balkonförmige Aufnahmen, Rasthaken und Befestigungsöffnungen.

Die die korrespondierenden Aufnahmeöffnungen für die Befestigungsvorrichtungen aufweisende Befestigungsleiste wird für die Montage zunächst mit dem Schieberiegel kombiniert, der die dazu erforderlichen Einrichtungen zum Aufstecken und/oder Aufclipsen auf die Befestigungsleiste aufweist. Darüber hinaus weist der Schieberiegel mit den Befestigungsvorrichtungen des Führungsprofils korrespondierende Verriegelungsvorrichtungen auf. Diese Verriegelungsvorrichtungen umfassen Verriegelungszungen, die in die balkonförmigen Aufnahmen des Führungsprofils eingreifen, sowie mit den Rasthaken des Führungsprofils in Wirkverbindung tretende Raststege.

Bei der Montage der Stoßfängerverkleidung wird zunächst das Führungsprofil an der Karosserie befestigt und parallel der Schieberiegel auf die Befestigungsleiste aufgeclipst oder aufgeklemmt. Sollte die Befestigungsleiste als separates Bauteil eingesetzt werden, muss dieses zunächst auf die Stoßfängerverkleidung aufgesteckt werden.

Bei einer bevorzugten Ausführungsform der vorliegenden Erfindung werden Stoßfängerverkleidungen eingesetzt, bei denen die Befestigungsleiste direkt angeformt ist. Anschließend wird die Stoßfängerverkleidung auf das Führungsprofil an der Karosserie aufgeschoben, wobei der Schieberiegel nach unten verschoben wird und die Verriegelungszungen des Schieberiegels in die balkonförmigen Aufnahmen des Befestigungsprofils eingreifen, während die Raststege des Schieberiegels mit den Rasthaken an dem Befestigungsprofil in Wirkverbindung treten und die Stoßfängerverkleidung an der Karosserie fixieren.

Die Demontage kann durch einfaches Herausziehen des Schieberiegels und durch anschließendes Abnehmen der Stoßfängerverkleidung von der Karosserie erfolgen.

Die Vorteile dieser Anordnung bestehen darin, dass es sich um ein einfaches und effizientes Montagesystem handelt, mit dem aufgrund der speziellen Ausgestaltung der Befestigungsvorrichtungen am Führungsprofil eine sehr exakte Montage in X-, Y- und Z-Richtung erfolgen kann, wobei die Y-Richtung als Fahrtrichtung gesehen wird, die X-Richtung quer zur Fahrtrichtung verläuft und die Y-Richtung nach oben und unten verläuft. Das Montagesystem ist so angeordnet, dass es vor der Montage der Heck- und/oder Frontleuchten über die Lampenöffnung von außen leicht zugänglich ist und vor allem kein zusätzliches Werkzeug für die Montage selber erforderlich ist, da mit dem Schieberiegel eine sichere und feste Verbindung zwischen Stoßfängerverkleidung und Karosserie realisiert wird.

Die Bauteile des Montagesystems, insbesondere die Befestigungsleiste und das Führungsprofil, bestehen vorteilhaft aus thermoplastischem Kunststoff, ausgewählt aus der Gruppe Polypropylen (PP), Polyethylen (PE), Polyamid (PA), Polystyrol (PS), Polyvinylchlorid (PVC), Polycarbonat (PC), Polybutylenterephthalat (PBT), Polyacrylnitril (PAN), Polymethylmetacrylat (PMMA), Acrylnitril-Butadien-Styrol (ABS), Acrylnitril-Butadien-Styrol/Polycarbonat-Copolimerisat (ABS/PC), Polyvinylether (PPE), Styrolacrylnitril (SAN), und/oder Polyoxymethylen (POM) und sind im Spritzgussverfahren gefertigt. Eine vorteilhafte Ausgestaltung des erfindungsgemäßen Montagesystems sieht vor, dass der Schieberiegel aus Metall durch Kaltverformen gefertigt ist.

Im Folgenden wird die vorliegende Erfindung anhand von Bildern ausführlich erläutert. Dabei zeigen
- Fig. 1: eine perspektivische Darstellung eines Teilbereiches des Führungsprofils,
- Fig. 2: eine perspektivische Darstellung eines Ausschnittes der Stoßfängerverkleidung mit Befestigungsleiste und
- Fig. 3: eine Schnittdarstellung des Befestigungssystems im montierten Zustand.

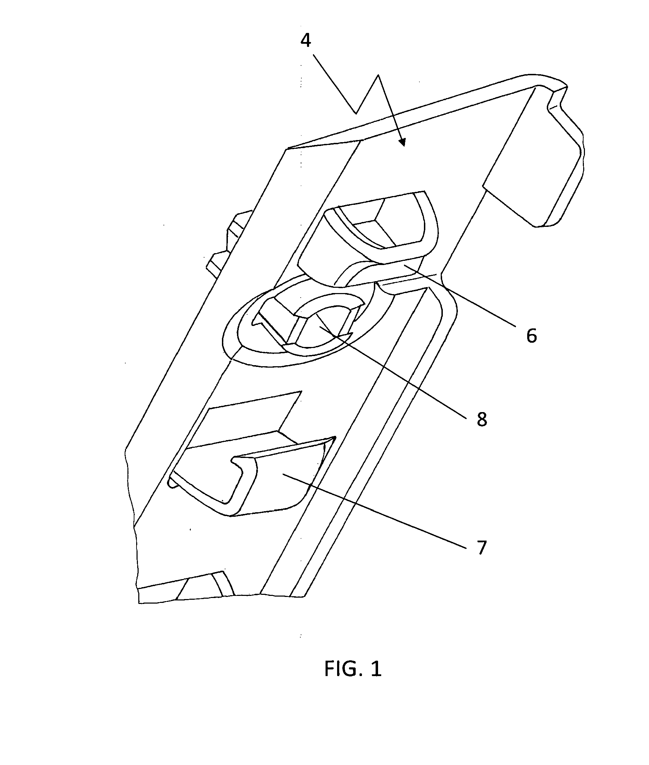

Die Figur 1 zeigt in perspektivischer Darstellung einen Teilbereich des Führungsprofils 4, bei dem die unterschiedlichen Befestigungsvorrichtungen zu erkennen sind, die balkonförmige Aufnahmen 6, Rasthaken 7 und Befestigungsöffnungen 8 umfassen. Über die Befestigungsöffnungen 8 wird das Befestigungsprofil 4 an der Fahrzeugkarosserie 2 befestigt, während die balkonförmige Aufnahme 6 und der Rasthaken 7 zur Aufnahme der korrespondierenden Verriegelungsvorrichtungen des Schieberiegels 5 vorgesehen sind. Die Befestigung an der Fahrzeugkarosserie 2 erfolgt bspw. über Schraubverbindungen, wobei die Schrauben in die Befestigungsöffnungen 8 eingreifen. Im Bereich der Befestigungsöffnung 8 ist auf der Rückseite des Führungsprofils eine Hervorhebung zu erkennen, die bspw. in entsprechende Aufnahmeöffnungen an der Fahrzeugkarosserie 2 eingreift, womit dann die Lage des Führungsprofils 4 bestimmt ist. Das Führungsprofil 4 ist vorzugsweise aus einem thermoplastischen Kunststoff gefertigt.

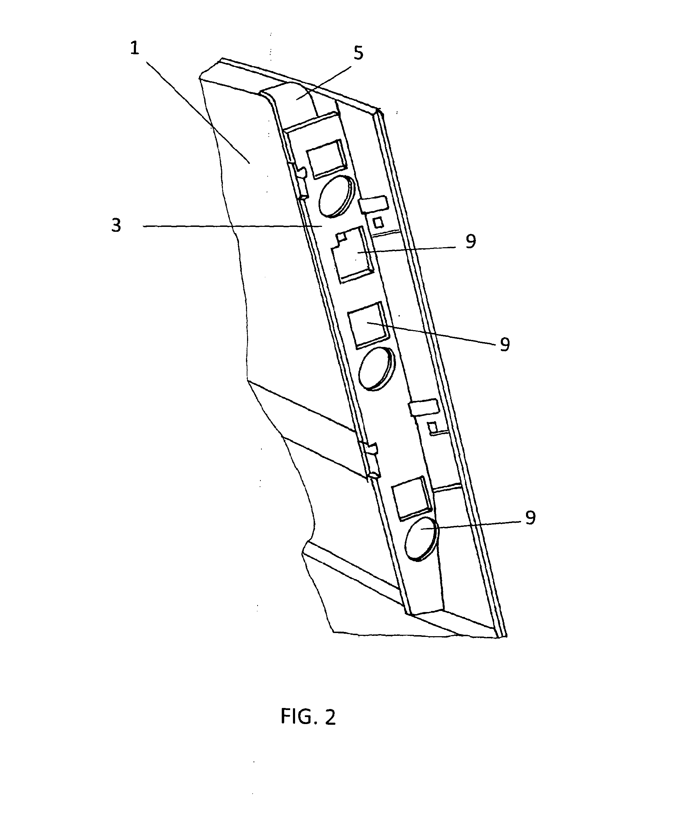

Die Figur 2 zeigt die zu dem Führungsprofil 4 korrespondierende Befestigungsleiste 3 mit den entsprechenden Aufnahmeöffnungen 9 für die Befestigungsvorrichtungen 6, 7, 8 des Führungsprofils 4. Je nach Ausgestaltung der Erfindung ist die Befestigungsleiste 3 entweder der Stoßfängerverkleidung 1 direkt angeformt oder sie wird als separates Bauteil auf die Stoßfängerverkleidung 1 aufgesteckt. Auf der Rückseite der Befestigungsleiste 3 ist der aufgeklemmte oder aufgeclipste Schieberiegel 5 zu erkennen, der bei der vorliegenden Abbildung in der Entriegelungsposition angeordnet ist, wobei die Befestigungsöffnungen 9 der Befestigungsleiste 3 freigegeben sind und für die Aufnahme der Befestigungsvorrichtungen 6, 7, 8 des Führungsprofils 4 bereit sind.

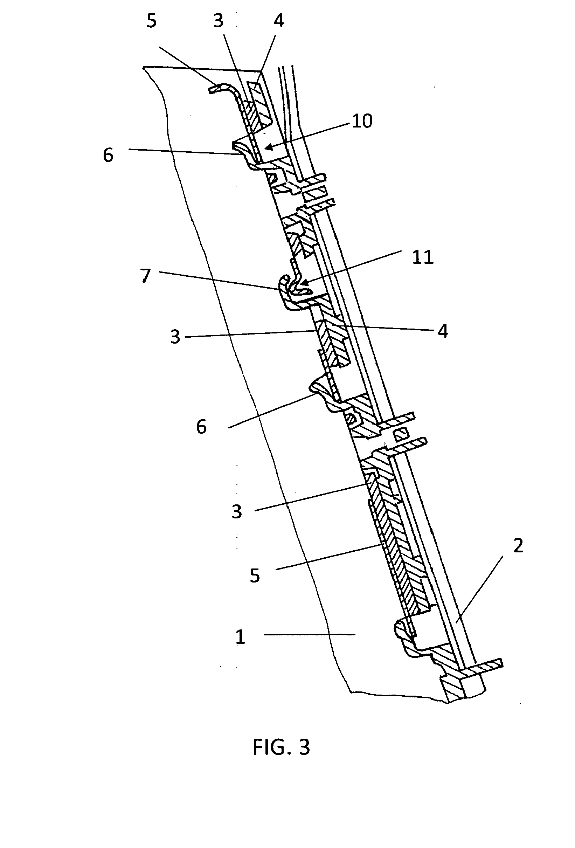

In der Figur 3 schließlich ist das gesamte Befestigungssystem in einer Schnittdarstellung im Montagezustand zu sehen, wobei das Führungsprofil 4 direkt auf der Fahrzeugkarosserie 2 angeordnet ist und mit einer Art Führung im Bereich der Befestigungsöffnungen 8 in entsprechende Aufnahmeöffnungen in der Fahrzeugkarosserie 2 eingreift. Die Befestigungsleiste 3 liegt direkt auf dem Führungsprofil 4 auf, sodass die Befestigungsvorrichtungen 6, 7, 8 des Führungsprofils 4 durch die Aufnahmeöffnungen 9 der Befestigungsleiste 3 durchgreifen. Das gesamte Befestigungssystem ist durch den Schieberiegel 5 gesichert, der mit seinen Verriegelungszungen 10 in die balkonförmigen Aufnahmen des Führungsprofils 4 eingreift, während der Raststeg 11 des Schieberiegels 5 mit den Rasthaken 7 des Führungsprofils 4 in Wirkverbindung tritt.

### Bezugszeichenliste

- 1: Stoßfängerverkleidung
- 2: Kraftfahrzeugkarosserie
- 3: Befestigungsleiste
- 4: Führungsprofil
- 5: Schieberiegel
- 6: Balkonförmige Aufnahme
- 7: Rasthaken
- 8: Befestigungsöffnung
- 9: Aufnahmeöffnung
- 10: Verriegelungszunge
- 11: Raststeg

## Patentansprüche

1. Montagesystem für die Befestigung einer Stoßfängerverkleidung (1) an einer Kraftfahrzeugkarosserie (2) mit
- einer an der Stoßfängerverkleidung (1) angeordneten, Aufnahmeöffnungen (9) für Befestigungsvorrichtungen (6, 7, 8) aufweisenden Befestigungsleiste (3),
- einem an der Fahrzeugkarosserie (2) befestigbarem, zu den Aufnahmeöffnungen (9) in der Befestigungsleiste (3) korrespondierende Befestigungsvorrichtungen (6, 7, 8) aufweisendem Führungsprofil (4) und
- einem im Montagezustand einen Verbindungsschluss zwischen der Befestigungsleiste (3) und dem Führungsprofil (4) bewirkendem, korrespondierende Aufnahmeöffnungen (12) für die Befestigungseinrichtungen (6, 7, 8) aufweisendem Schieberiegel (5),
**dadurch gekennzeichnet, dass** zumindest das Führungsprofil (4) und der Schieberiegel (5) als separate Bauteile ausgeführt sind.

2. Vorrichtung nach Anspruch 1,
**dadurch gekennzeichnet, dass** die Befestigungsleiste (3) der Stoßfängerverkleidung (1) direkt angeformt ist.

3. Vorrichtung nach Anspruch 1,
**dadurch gekennzeichnet, dass** die Befestigungsleiste (3) als separates, auf die Stoßfängerverkleidung (1) aufsteckbares Bauteil ausgeführt ist.

4. Vorrichtung nach einem der Ansprüche 1 bis 3,
**dadurch gekennzeichnet, dass** die Befestigungsvorrichtungen des Führungsprofils (4) balkonförmige Aufnahmen (6), Rasthaken (7) und Befestigungsöffnungen (8) umfassen.

5. Vorrichtung nach einem der Ansprüche 1 bis 4,
**dadurch gekennzeichnet, dass** der Schieberiegel (5) Einrichtungen zum Aufstecken und/oder Aufclipsen des Schieberiegels (5) auf die Befestigungsleiste (3) aufweist.

6. Vorrichtung nach einem der Ansprüche 1 bis 5,
**dadurch gekennzeichnet, dass** der Schieberiegel (5) mit den Befestigungsvorrichtungen (6, 7, 8) des Führungsprofils (4) korrespondierende Verriegelungsvorrichtungen (10, 11) aufweist.

7. Vorrichtung nach einem der Ansprüche 1 bis 6,
**dadurch gekennzeichnet, dass** die Verriegelungsvorrichtungen in die balkonförmigen Aufnahmen (6) eingreifende Verriegelungszungen (10) und mit den Rasthaken (7) in Wirkverbindung tretende Raststege (11) umfassen.

8. Vorrichtung nach einem der Ansprüche 1 bis 7,
**dadurch gekennzeichnet, dass** die Bauteile des Montagesystems jeweils aus einem thermoplastischen Kunststoff ausgewählt aus der Gruppe Polypropylen (PP), Polyethylen (PE), Polyamid (PA), Polystyrol (PS), Polyvinylchlorid (PVC), Polycarbonat (PC), Polybutylenterephthalat (PBT), Polyacrylnitril (PAN), Polymethylmethacrylat (PMMA), Acrylnitril-Butadien-Styrol (ABS), Acrylnitril-Butadien-Styrol/Polycarbonat-Copolymerisat (ABSPC), Polyphenylether (PPE), Styrol-Acrylnitril (SAN) und/oder Polyoxymethylen (POM) im Spritzgussverfahren gefertigt sind.

9. Vorrichtung nach einem der Ansprüche 1 bis 7,
**dadurch gekennzeichnet, dass** der Schieberiegel (5) aus Metall durch Kaltverformen gefertigt ist.
